(19) Europäisches Patentamt / European Patent Office / Office européen des brevets

(11) **EP 3 685 352 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **18762842.5**

(22) Anmeldetag: **03.09.2018**

(51) Internationale Patentklassifikation (IPC):
**G06T 7/33** *(2017.01)* **G06T 7/269** *(2017.01)*
**G06T 7/00** *(2017.01)*

(52) Gemeinsame Patentklassifikation (CPC):
**G06T 7/33; G06T 7/00; G06T 7/269;**
G06T 2207/10021; G06T 2207/10032;
G06T 2207/20016; G06T 2207/20021;
G06T 2207/30252

(86) Internationale Anmeldenummer:
**PCT/EP2018/073589**

(87) Internationale Veröffentlichungsnummer:
**WO 2019/057473 (28.03.2019 Gazette 2019/13)**

(54) **VERFAHREN UND VORRICHTUNG ZUM BEWERTEN VON BILDERN, BETRIEBSASSISTENZVERFAHREN UND BETRIEBSVORRICHTUNG**

METHOD AND DEVICE FOR EVALUATING IMAGES, OPERATING ASSISTANCE METHOD, AND OPERATING DEVICE

PROCÉDÉ ET DISPOSITIF D'ÉVALUATION D'IMAGES, PROCÉDÉ D'AIDE À LA COMMANDE ET DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017 DE 102017216854**

(43) Veröffentlichungstag der Anmeldung:
**29.07.2020 Patentblatt 2020/31**

(73) Patentinhaber: **Robert Bosch GmbH**
**70442 Stuttgart (DE)**

(72) Erfinder:
• **ZENDER, Arne**
**31162 Bad Salzdetfurth (DE)**
• **SIMON, Stephan**
**31079 Sibbesse (DE)**

(56) Entgegenhaltungen:
WO-A1-2016/109876    WO-A2-2004/059900
GB-A- 2 520 243    US-A1- 2010 166 323

• **RUICHEK Y ET AL: "Towards Real-Time Obstacle Detection Using a Hierarchical Decomposition Methodology for Stereo Matching with a Genetic Algorithm", TOOLS WITH ARTIFICIAL INTELLIGENCE, 2004. ICTAI 2004. 16TH IEEE INTERN ATIONAL CONFERENCE ON BOCA RATON, FL, USA 15-17 NOV. 2004, PISCATAWAY, NJ, USA,IEEE, 15 November 2004 (2004-11-15), pages 138-147, XP010759668, ISBN: 978-0-7695-2236-4**

**Beschreibung**

Stand der Technik

Die vorliegende Erfindung betrifft ein Verfahren und eine Vorrichtung zum Bewerten von Bildern und insbesondere von Korrespondenzen von Bildern gemäss Ansprüchen 1 und 9, ein Betriebsassistenzverfahren und insbesondere ein Fahrassistenzverfahren gemäss Anspruch 8 sowie eine Betriebsvorrichtung und insbesondere ein Fahrzeug gemäss Anspruch 10. Die vorliegende Erfindung betrifft des Weiteren ein Computerprogramm und ein maschinenlesbares Speichermedium gemäss Ansprüchen 11 und 12.

In vielen technischen Bereichen wird zur Steuerung von Vorrichtungen und Prozessen Bildverarbeitung eingesetzt, zum Beispiel auch im Bereich der Automobilindustrie bei so genannten Fahrerassistenzsystemen. In diesem Zusammenhang werden z.B. Bilder erfasst und einem Steuerprozess zu Grunde gelegt. Dazu müssen die Bilder bewertet werden. Bei der Bildbewertung werden häufig so genannte Korrespondenzen erzeugt und der Bewertung zu Grunde gelegt. Derartige Korrespondenzen beschreiben pixelweise und in zeitlicher und/oder räumlicher Richtung Zuordnungen zwischen Koordinaten in einem ersten Bild und Koordinaten in einem zweiten Bild. Bei einer zeitlichen Beziehung kann es sich um aufeinanderfolgend aufgenommene Bilder handeln..

Die Schrift GB 2 520 243 A offenbart einen Bildprozessor zur Analyse einer zeitlichen Abfolge von Bildern. Zu jedem Bild identifiziert der Bildprozessor Objektmerkmale und ordnet diese Merkmale bereits vorher identifizierten Objektmerkmalen zu, um korrespondierende Merkmalspaare zu bilden. Die ermittelten korrespondierenden Merkmalspaare werden dazu genutzt, um Pfade von Objektteilen durch das Bild zu generieren und zu aktualisieren, welche wiederum über die Zeit zur Kollisionsprognose verwendet werden.

Offenbarung der Erfindung

Das erfindungsgemäße Verfahren zur Bewertung von Bildern mit den Merkmalen des Anspruchs 1 weist den Vorteil auf, dass mit vergleichsweise geringem Aufwand Korrespondenzen zu einem Paar von Bildern mit hoher Zuverlässigkeit geprüft und bei Verifikation ausgewählt werden können. Dies wird erfindungsgemäß mit den Merkmalen des Anspruchs 1 dadurch erreicht, dass ein Verfahren zur Bewertung von Bildern und insbesondere zum Bewerten von Korrespondenzen von Bildern geschaffen wird, welches die Schritte aufweist:

(i) Bereitstellen von Korrespondenzen zwischen gegebenen ersten und zweiten Bildern,

(ii) Bereitstellen eines oder einer Mehrzahl von Qualitätsmaßen als Attribute zur Charakterisierung einer jeweiligen Korrespondenz,

(iii) Bewerten und bedingtes Selektieren der Korrespondenzen und

(iv) Bereitstellen selektierter Korrespondenzen als Bewertungsergebnis.

Dabei werden erfindungsgemäß dem Bewerten von Korrespondenzen eine Kombination von Attributen und dem Selektieren von Korrespondenzen ein Ergebnis des Bewertens zu Grunde gelegt. Durch die erfindungsgemäß vorgesehenen Maßnahmen wird erreicht, dass bereits ermittelte Korrespondenzen auf Grund der Verwendung von miteinander kombinierten Attributen zu den Korrespondenzen beim Bewerten bei der Auswahl der Korrespondenzen ein hohes Maß an Selektivität und Genauigkeit erzielt wird. Auf Grund der Selektion kann bei der Weiterverarbeitung oder Weiterverwendung der Datenaufwand ohne Genauigkeitseinbußen reduziert werden.

Im Sinne der vorliegenden Erfindung kann die Gesamtheit der Korrespondenzen auch als Korrespondenzbild, -satz oder -matrix aufgefasst werden, deren einzelne Bestandteile dann auch als Elemente oder Pixel bezeichnet werden. Die einzelnen Korrespondenzen können eine oder auch mehrere skalare Komponenten aufweisen, zum Beispiel Werte für verschiedene Bewegungsrichtungen u, v im Raum. Sie können somit vektorwertig sein. Ferner können die Korrespondenzen auf dem Konzept des optischen Flusses, auch als OF bezeichnet, beruhen.

In analoger Weise können auch die Gesamtheit der Qualitätsmaße, Attribute und/oder selektierten Korrespondenzen als entsprechende Bilder, Datensätze und/oder Matrizen mit entsprechenden Elementen oder Pixeln aufgefasst werden.

Die vorliegende Erfindung ist anwendbar im Zusammenhang mit jeglicher Form von Kameras, Überwachungskameras und/oder Messtechnikkameras, zum Beispiel - aber nicht nur - an oder in Fahrzeugen im Allgemeinen, insbesondere im Zusammenhang mit Kraftfahrzeugen. Mit umfasst sind dabei auch Anwendungen der Erfindung im Zusammenhang mit Fernsehkameras, Consumerkameras, Drohnenkameras, Mensch-Maschine-Interaktionskameras usw.

Die Unteransprüche zeigen bevorzugte Weiterbildungen der Erfindung.

Zur Realisierung der jeweiligen Qualitätsmaße oder Attribute zu jeweils betrachteten Korrespondenzen können verschiedenste Aspekte, die eine Bewertung von Korrespondenzen ermöglichen, einzeln oder in beliebiger Kombination miteinander herangezogen werden.

So ist es gemäß einer bevorzugten Ausgestaltungsform des erfindungsgemäßen Verfahrens möglich, dass ein jeweiliges Qualitätsmaß als Attribut einer betrachteten Korrespondenz repräsentativ ist für mindestens einen der folgenden Aspekte oder einer Kombination davon, also z.B.

- für ein Maß einer - zumindest lokalen - Ortsabhängigkeit und/oder Raumwinkelabhängigkeit der Verteilung der Korrespondenzen zumindest im Bereich einer jeweils betrachteten Korrespondenz und insbesondere für ein Maß der Gleichmäßigkeit einer ortsabhängigen und/oder raumwinkelabhängigen Verteilung der Korrespondenzen,

- für ein Maß einer Priorität zur bevorzugten Berücksichtigung einer zu Grunde liegenden Korrespondenz,

- für ein Maß für das Vorliegen einer korrekten Zuordnung einer jeweiligen Korrespondenz zu Bereichen der zu Grunde liegenden Bilder,

- für ein Maß einer Eigenbewegung der mit der jeweiligen Korrespondenz im Zusammenhang stehenden Bereiche der zu Grunde liegenden Bilder, insbesondere eines damit im Zusammenhang stehenden Objekts und/oder unter Berücksichtigung nicht epipolarer konformer Bewegungen,

- für ein Maß einer Bewegungsmöglichkeit der mit der jeweiligen Korrespondenz im Zusammenhang stehenden Bereiche der zu Grunde liegenden Bilder, insbesondere eines damit im Zusammenhang stehenden Objekts,

- für ein Maß einer Genauigkeit, mit welcher eine jeweilige Korrespondenz bestimmt wurde,

- für ein Maß einer bei der Ermittlung der jeweiligen Korrespondenz zu Grunde gelegten Auflösung oder Auflösungsstufe,

- für ein Maß einer Zugehörigkeit der mit der jeweiligen Korrespondenz im Zusammenhang stehenden Bereiche der zu Grunde liegenden Bilder, insbesondere eines damit im Zusammenhang stehenden Objekts, zu einer semantischen Klasse, vorzugsweise auf der Grundlage einer videobasierten Objektklassifikation, eines Vorgangs maschinellen Lernens und/oder eines Vorgangs der semantischen Segmentierung,

- für ein Maß einer Zugehörigkeit der mit der jeweiligen Korrespondenz im Zusammenhang stehenden Bereiche der zu Grunde liegenden Bilder, insbesondere eines damit im Zusammenhang stehenden Objekts, zu einer Klasse zur Berücksichtigung zugelassener Bereiche der zu Grunde liegenden Bilder, insbesondere im Zusammenhang mit einer Maskierung,

- für ein Maß der Eindeutigkeit, mit welcher eine jeweilige Korrespondenz in einem lokalen Umfeld ermittelt wird oder wurde,

- für ein Maß der Konsistenz einer jeweiligen Korrespondenz mit einer zeitlich vorangegangenen Korrespondenz, insbesondere im Hinblick auf ein Maß von Konsistenz von Flussvektoren über die Zeit, wobei bei bestätigter Konsistenz ein zu Grunde liegendes zeitlich stabiles Verhalten insbesondere in Form eines Alters als Zahlenwert angegeben wird.

Ein besonders hohes Maß an Flexibilität stellt sich bei einer anderen vorteilhaften Ausgestaltungsform des erfindungsgemäßen Verfahrens dadurch ein, dass kombinierte Qualitätsmaße als Attribute verwendet werden, die aus einem oder einer Mehrzahl von Qualitätsmaßen abgeleitet sind durch Kombinationsbildung und/oder Funktionsbildung, insbesondere durch Kehrwertbildung, Vorzeichenumkehr, Rundung, Bildung von Funktionswerten von den Qualitätsmaßen zu Grunde liegenden skalaren oder vektoriellen Werten.

Der konkrete Ablauf des erfindungsgemäßen Verfahrens lässt sich besonders einfach gestalten, wenn gemäß einer anderen vorteilhaften Weiterbildung des erfindungsgemäßen Verfahrens ein jeweiliges Attribut und/oder zu Grunde liegenden Qualitätsmaße und insbesondere deren Werte zur Nutzung als Adresse codiert verwendet werden, insbesondere im Zusammenhang mit einer Werte der Attribute und/oder der Qualitätsmaße repräsentierenden Auslesetabelle und insbesondere einer Lookup-Tabelle.

Zusätzlich oder alternativ stellt sich eine weitere Vereinfachung und Ökonomisierung des erfindungsgemäßen Verfahrens dann ein, wenn gemäß einer anderen Ausführungsform eine jeweilige Korrespondenz als eindimensionale Liste oder als Vektor repräsentiert wird und ein der Korrespondenz jeweils zugeordnetes Attribut und/oder deren Kodierung als ein oder mehrere zusätzliche Listenelemente bzw. Vektorkomponenten oder als Teile davon repräsentiert wird und der Liste bzw. dem Vektor angefügt ist bzw. sind.

Bei konkreten Anwendungen stehen zum Zeitpunkt des Ableitens der Korrespondenzen möglicherweise nicht sämtliche Werte der zu Rate zu ziehenden Qualitätsmaße und/oder Attribute zur Verfügung.

Auch im Zusammenhang mit derartigen Situationen ist es vorteilhaft, wenn Attribute und/oder Qualitätsmaße zu Korrespondenzen eines früheren Zeitpunkts auf eine Korrespondenz zu einem späteren Zeitpunkt übertragen und/oder extrapoliert werden.

Das erfindungsgemäße Verfahren lässt sich gemäß einer anderen vorteilhaften Ausgestaltungsform weiter ökonomisieren, indem die Korrespondenzen, insbesondere in Kombination mit den zugeordneten Attributen in ihrer Gesamtheit, tatsächlich als Bild, Matrix oder dergleichen repräsentiert werden, das Bild bzw. die Matrix durch überlappende und/oder nicht überlappende Teilregionen - insbesondere nach Art einer Parkettierung oder Kachelung - überdeckt werden und für jede Teilregion in Bezug auf in der Teilregion vorliegende Korrespondenzen - falls vorhanden - eine - insbesondere im Hinblick auf die zugeordneten Attribute - beste Korrespondenz selektiert wird.

Die vorliegende Erfindung betrifft des Weiteren ein Betriebsassistenzverfahren und insbesondere Fahrassistenzverfahren für eine Vorrichtung und insbesondere für ein Fahrzeug, bei welchem Bilder erfasst und mit einem Verfahren nach einem erfindungsgemäßen Verfahren bewertet werden und bei welchem ein Ergebnis der Bewertung bei der Steuerung des Betriebs der Vorrichtung verwendet wird.

Gemäß einem anderen Aspekt der vorliegenden Erfindung wird auch eine Vorrichtung zur Bewertung von Bildern und insbesondere zum Bewerten von Korrespondenzen von Bildern angegeben, welche eingerichtet ist ein erfindungsgemäßes Betriebsassistenzverfahren oder Fahrassistenzverfahren bzw. ein erfindungsgemäßes Verfahren zum Bewerten von Bildern und insbesondere von Korrespondenzen zu Bildpaaren auszuführen.

Die erfindungsgemäße Vorrichtung kann insbesondere als ASIC, als frei programmierbare digitale Signalverarbeitungsvorrichtung oder als Kombination davon ausgebildet sein.

Des Weiteren wird durch die vorliegende Erfindung ein Computerprogramm angegeben, welches eingerichtet ist, ein erfindungsgemäßes Verfahren auszuführen, wenn es auf einem Computer oder einer digitalen Signalverarbeitungseinrichtung ausgeführt wird.

Ferner schafft die vorliegende Erfindung auch ein maschinenlesbares Speichermedium, auf dem das erfindungsgemäße Computerprogramm gespeichert ist.

Kurzbeschreibung der Figuren

Unter Bezugnahme auf die beigefügten Figuren werden Ausführungsformen der Erfindung im Detail beschrieben.

Figuren 1 und 2    zeigen schematisch in Form eines Flussdiagramms bzw. nach Art eines Blockdiagramms Ausführungsformen des erfindungsgemäßen Verfahrens und illustrieren die Zusammenhänge zwischen den zu Grunde liegenden Bildern und Korrespondenzen, Attributen und weiteren Informationen.

Figuren 3 bis 5    zeigen schematisch Ergebnisse der Anwendung einer Ausführungsform des erfindungsgemäßen Verfahrens anhand entsprechender Bilder von Korrespondenzverteilungen.

Figur 6    zeigt schematisch einen möglichen Aufbau der Darstellung eines Flussvektors als Korrespondenz mit angehängten Attributen.

Figuren 7 und 8    zeigen schematisch die Anwendung einer Parkettierung oder Kachelung zur Überdeckung eines Bildes von Korrespondenzen.

Figuren 9A bis 9C    beschreiben schematisch die Anwendung einer Maske und einen diesbezüglichen zeitlichen Übertrag.

Bevorzugte Ausführungsformen der Erfindung

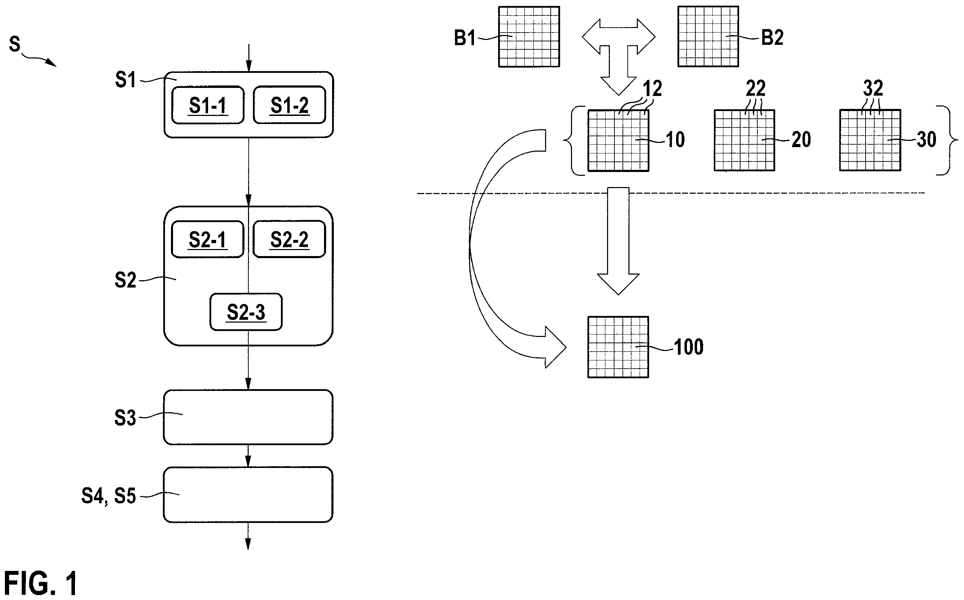

Nachfolgend werden unter Bezugnahme auf die Figuren 1 bis 9C Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

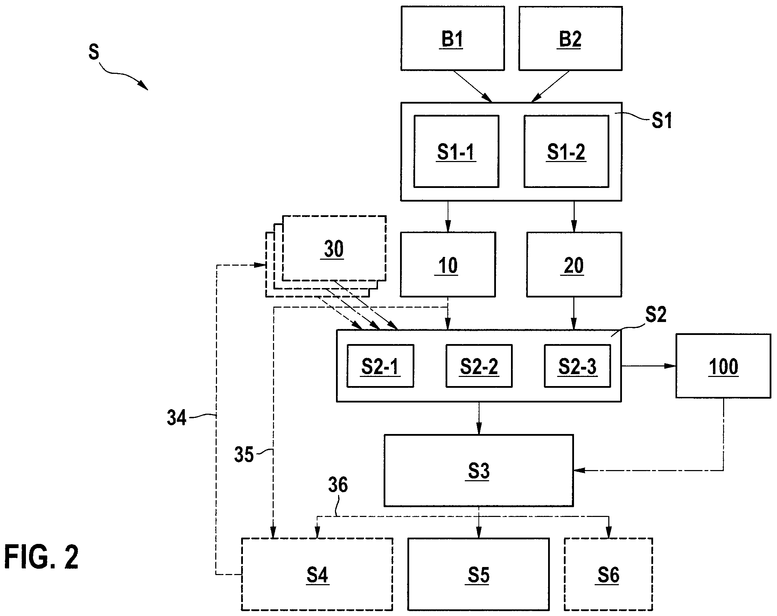

Die Figuren 1 und 2 zeigen schematisch in Form eines Flussdiagramms bzw. nach Art eines Blockdiagramms Ausführungsformen des erfindungsgemäßen Verfahrens S und illustrieren die Zusammenhänge zwischen den zu Grunde liegenden Bildern B1, B2 und Korrespondenzen 12, Attributen 22 und weiteren Informationen 32, die hier korrespondierend zu den zu Grunde liegenden Bildern B1, B2 als entsprechende Bilder oder Matrizen 10, 20 bzw. 30 mit entsprechenden Pixeln oder Elementen gegeben sind.

Die Bilder B1, B2, 10, 20, 30 können voneinander abweichende Größen und/oder Formate oder auch eine Größe besitzen. Attributbilder können insbesondere auch kleiner sein, um Speicherplatz und/oder Bandbreite zu sparen. Sie können insbesondere horizontal und vertikal halb so groß wie die Inputbilder sein und bei Bedarf hochskaliert werden.

Die Ausführungsform des erfindungsgemäßen Verfahrens S zur Bewertung von Bildern B1, B2 und insbesondere von deren Korrespondenzen 12 besteht aus einem ersten Schritt S1, bei welchem in einem ersten Teilschritt S1-1 die Korrespondenzen 12 zu den Bildern B1, B2 als solche bereitgestellt werden, zum Beispiel in Form eines entsprechenden korrespondierenden Bildes 10 der Korrespondenzen 12, welches auch als Satz, Matrix oder Speicherbereich aufgefasst werden kann. In diesem Zusammenhang werden die einzelnen Korrespondenzen 12 auch als Elemente oder Pixel aufgefasst.

In einem zweiten Teilschritt S1-2 werden auf Grund einer Analyse der Korrespondenzen 12 entsprechende Attribute 22, zum Beispiel in Form von Qualitätsmaßen, abgeleitet und bereitgestellt. Die Gesamtheit der Attribute 22 kann wiederum als Bild 20, Satz, Matrix oder Speicherbereich aufgefasst werden, wobei die einzelnen Attribute 22 dann wiederum als Elemente oder Pixel enthalten sind.

Gegebenenfalls werden zusätzliche Informationen 32 entweder ergänzend zu den Attributen, zum Beispiel in diesen enthalten, oder als separate Entität, in Form eines Bildes 30, eines Satzes, einer Matrix oder eines Speicherbereichs, erzeugt und bereitgestellt. Dies ist jedoch nicht zwingend, oft jedoch vorteilhaft.

Die einzelnen Teilschritte S1-1 und S1-2 des ersten Verfahrensschritt S1 des Verfahrens S können parallel und zum Beispiel gleichzeitig oder seriell abgearbeitet werden.

In einem zweiten Schritt S2 des erfindungsgemäßen Verfahrens S erfolgen die Schritte des Bewertens S2-1 der Korrespondenzen 12, des bedingten Selektierens S2-2 der Korrespondenzen 12 und des Bereitstellens S2-3 der selektierten Korrespondenzen 12 als Bewertungsergebnis.

In Figur 1 ist dargestellt, dass die selektierten Korrespondenzen 12 wiederum in Form eines Bildes 100 bereitgestellt werden, wobei das Bild 100 auch als Satz, Matrix oder Speicherbereich aufgefasst werden kann. Dieses Vorgehen ist jedoch nicht zwingend.

Wenn die selektierten Korrespondenzen nur einen kleinen Bruchteil der Eingangsmenge von Korrespondenzen darstellen, kann es sehr von Vorteil sein, die Selektion nicht mehr als Bild oder Matrix darzustellen, sondern kompakter, z.B. als Liste.

Es schließt sich der Schritt S3 der Bestimmung einer relativen Orientierung und/oder einer Eigenbewegung auf der Grundlage der selektierten Korrespondenzen 12 an. Auf Grund der Selektion kann die Datenmenge reduziert und die Zuverlässigkeit sowie die Genauigkeit gesteigert werden.

Auf der Grundlage der ermittelten relativen Orientierung und/oder der Eigenbewegung können sich verschiedene andere Prozesse anschließen, zum Beispiel ein Vorgang S4 der Bestimmung der Klasse der eigenbewegten Objekte oder dergleichen sowie alternativ oder zusätzlich bestimmte Anwendungen S4, S5.

Figur 2 zeigt eine Darstellung nach Art eines Blockdiagramms, welche detaillierter Aufschluss über den Datenfluss gibt, insbesondere im Hinblick auf den Einfluss der Datenströme 35 und 36, nämlich dem Strom der Korrespondenzen 12 und der Daten zur Eigenbewegung und/oder zur relativen Orientierung im Hinblick auf die Klassifizierung eigenbewegter Objekte gemäß dem Verfahrensschritt S4 sowie dessen Einfluss über die Rückwirkung 34 auf den zweiten Verfahrensschritt S2 des Verfahrens S und insbesondere den Vorgang 2-2 des bedingten Selektierens, und zwar im Sinne des Zuführens zusätzlicher Informationen 30.

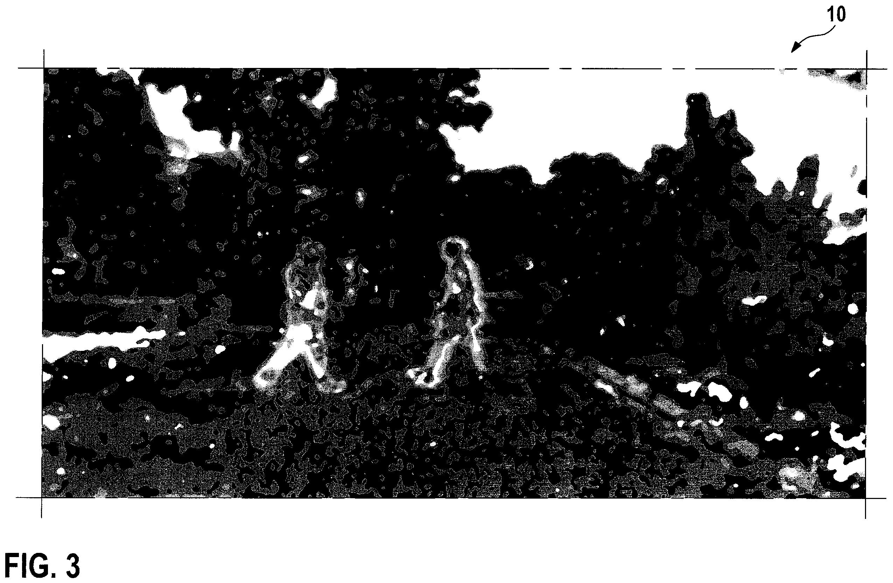

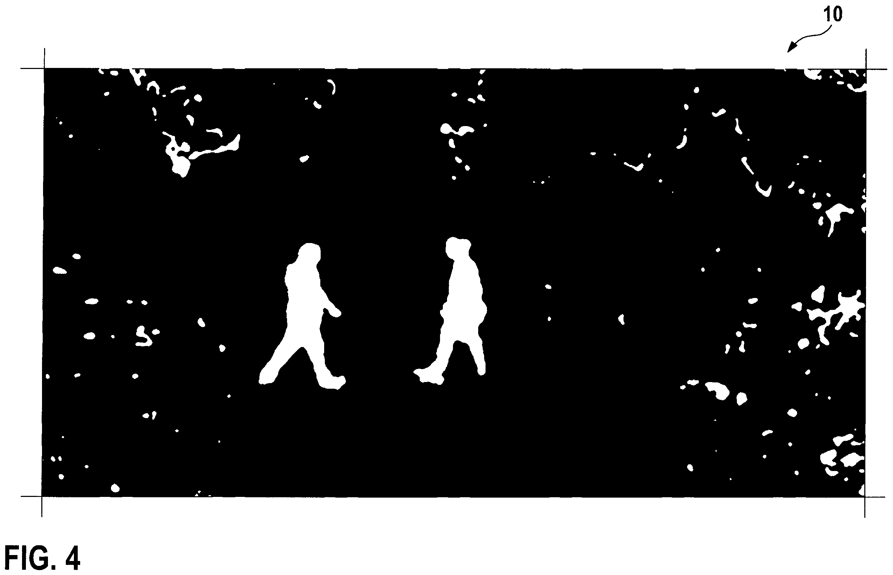

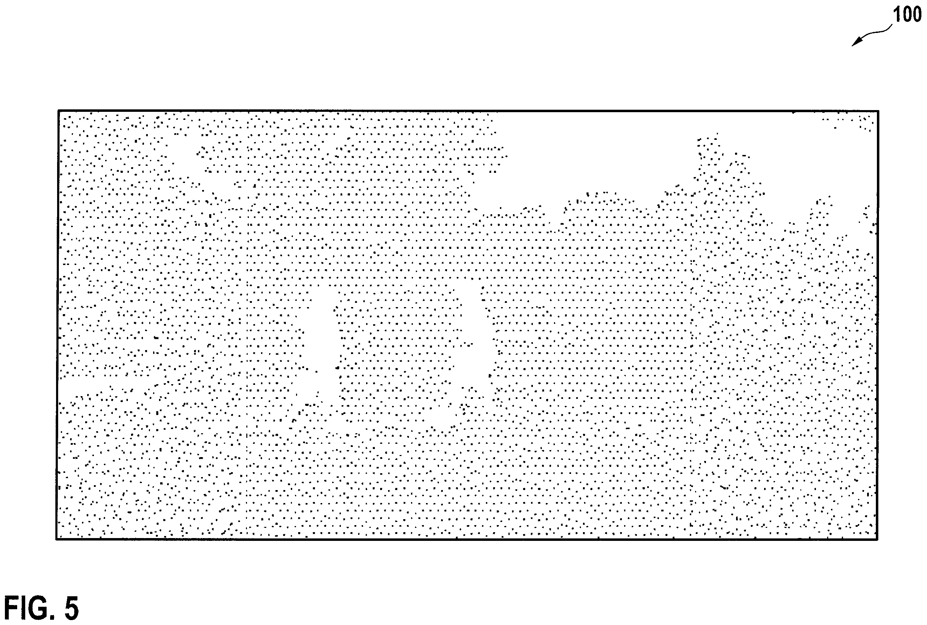

Die Figuren 3 bis 5 zeigen schematisch Ergebnisse der Anwendung einer Ausführungsform des erfindungsgemäßen Verfahrens S anhand entsprechender Bilder 10, 100 von Korrespondenzverteilungen, und zwar in der ursprünglichen Form der Korrespondenzen 12 in Figur 3, in einer maskierten Form der Korrespondenzen 12 in Figur 4 sowie nach Selektion der Korrespondenzen 12 in Figur 5. Dies wird in weiter unten folgenden Abschnitten detaillierter erörtert.

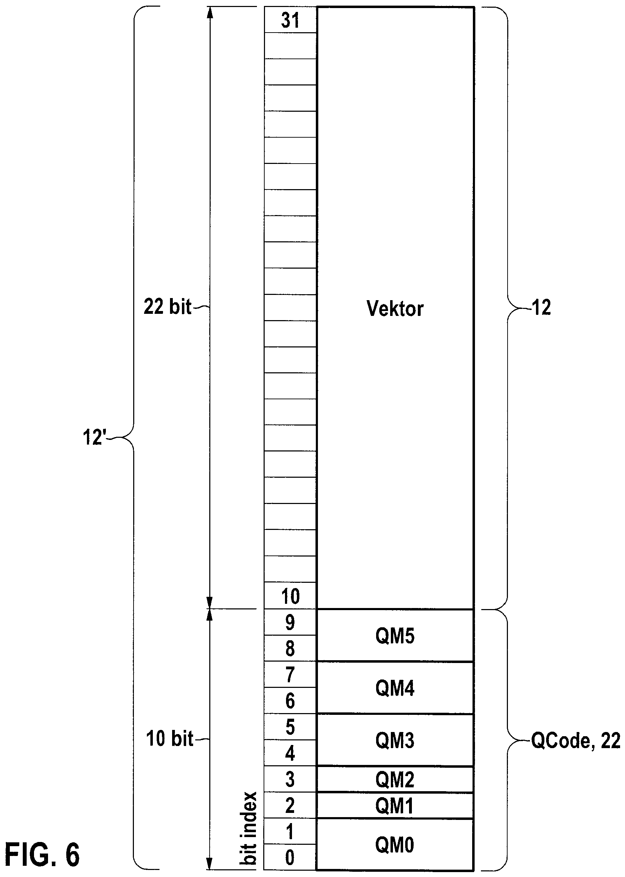

Figur 6 zeigt schematisch einen möglichen Aufbau der Darstellung eines Flussvektors, beispielsweise in einem Wort mit einer Länge von 32 bit, als Korrespondenz 12 mit angehängtem Attribut 22 als eigenen Codeabschnitt, der in diesem Zusammenhang auch als QCode bezeichnet wird und Abschnitte für 6 Qualitätsmerkmale QM0 bis QM05 umfasst. In diesem Zusammenhang ist die ursprüngliche Korrespondenz 12 durch Anhängen des Attributs 22 zu einer modifizierten Korrespondenz 12' abgewandelt dargestellt.

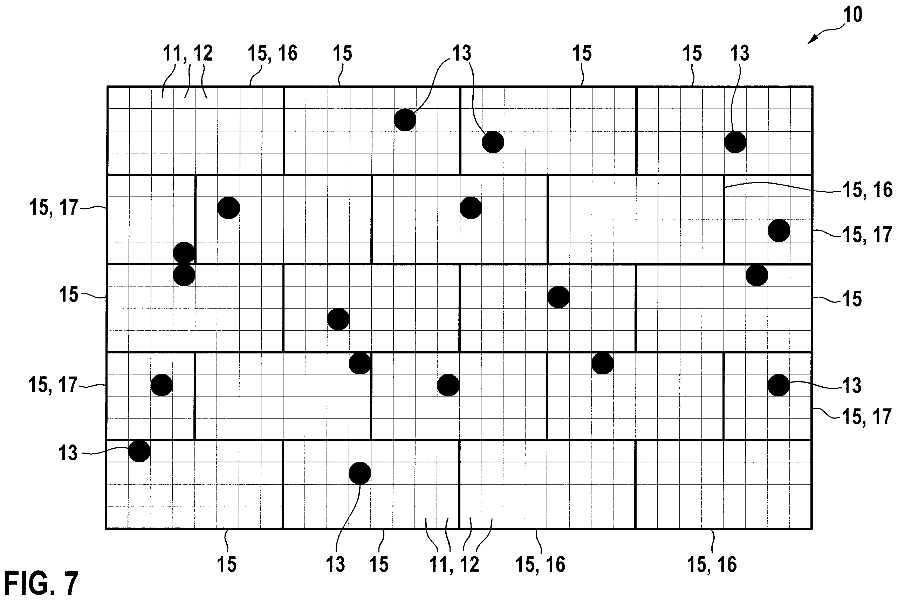

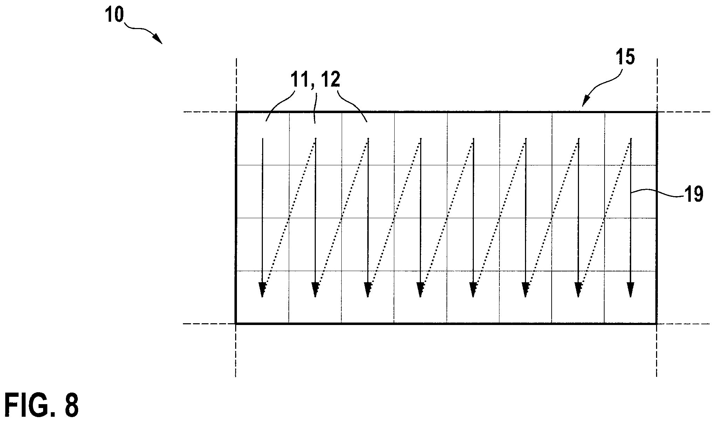

Die Figuren 7 und 8 zeigen schematisch die Anwendung einer Parkettierung oder Kachelung zur Überdeckung eines Bildes 10 von Korrespondenzen 12.

In Figur 7 ist die Gesamtheit aller bereitgestellten Korrespondenzen 12 nach Art einer Korrespondenzmatrix 10 gezeigt und kann auch als Bild aufgefasst werden, welches in seiner Struktur und Aufbau den entsprechenden zu Grunde liegenden Bildern B1 und B2 entspricht. Dieses Vorgehen ist jedoch nicht zwingend, die Matrix 10 und die Bilder B1, B2 können unterschiedliche Größen im Vergleich zueinander haben. Entsprechend sind in dem Bild oder in der Matrix 10 entsprechende Elemente oder Pixel 11 ausgebildet, die ein oder mehrere Korrespondenzen 12 enthalten können, aber nicht müssen, d.h. bestimmte Pixel 11 können leer sein, wenn sie keine Korrespondenz 12 enthalten.

Zur Überdeckung der Korrespondenzmatrix 10 mit den ursprünglichen Korrespondenzen 12 wird eine Parkettierung oder Kachelung mit Teilbereichen oder Teilregionen 15 erzeugt. Die einzelnen Teilbereiche oder Teilregionen 15 überdeckten sich nicht und decken in ihrer Gesamtheit das gesamte Korrespondenzbild 10 ab.

Bestimmte Teilregionen 16 weisen keine Korrespondenz 12 auf. Bestimmte Teilregionen 17 sind in der Darstellung gemäß Figur 7 anders geformt und besitzen eine andere Ausdehnung, weil sie am Rand liegen und einen Versatz der Teilregionen 15 gegeneinander gewährleisten.

Für jede der Teilregionen 15 wird, sofern sie nicht leer ist, durch einen Vergleich sämtlicher Korrespondenzen 12 innerhalb der jeweiligen Teilregion 15 eine bevorzugte Korrespondenz 13 bestimmt und selektiert. Dies wird in den Abschnitten weiter unten noch im Detail diskutiert.

Figur 8 betrachtet eine einzelne Kachel 15 der Überdeckung der Korrespondenzmatrix 10, wobei der Verlauf der Pfeile 19 den Pfad der Bearbeitung der Kachel 15 in Bezug auf die einzelnen Pixel 11 und die einzelnen Korrespondenzen 12 aufzeigt. Der Pfad der Bearbeitung gewährleistet, dass alle Pixel 11 der Kachel oder Teilregion 15 erreicht werden. Der Pfad der Bearbeitung der Kachel oder Teilregion 15 kann auch anders gewählt sein, beispielswiese bevorzugt horizontal statt vertikal, spiralförmig oder in zufälliger Reihenfolge.

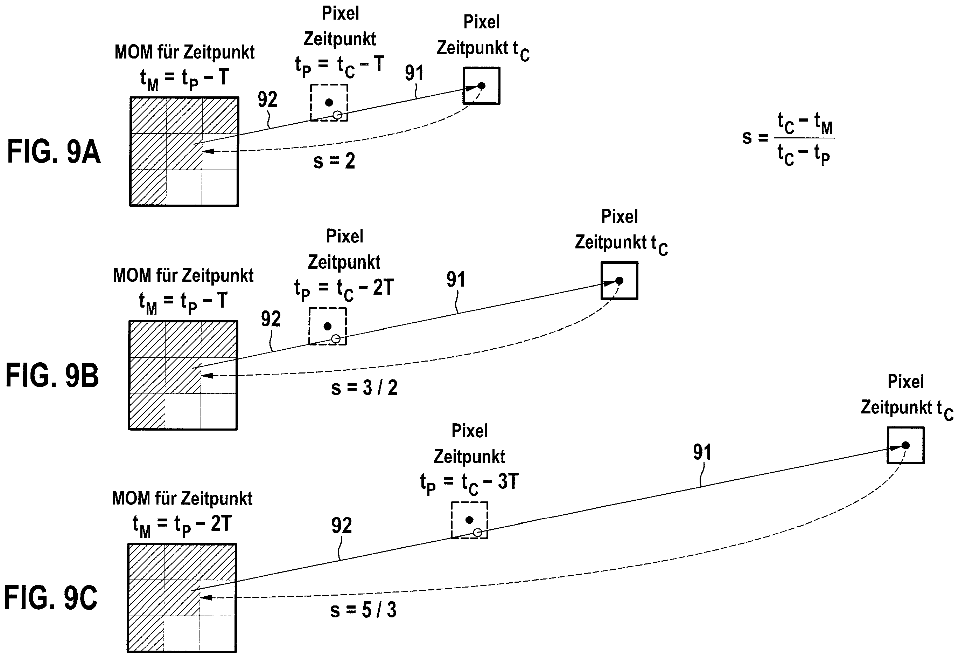

Die Figuren 9A bis 9C beschreiben schematisch die Anwendung einer Maske und einen diesbezüglichen zeitlichen Übertrag im Sinne eines Warpings. Diese Aspekte werden unten in weiteren Abschnitten im Detail dargestellt.

Diese und weitere Merkmale und Eigenschaften der vorliegenden Erfindung werden an Hand der folgenden Darlegungen weiter erläutert:

Die vorliegende Erfindung betrifft unter anderem das so genannte Priority-Sampling und alternativ oder zusätzlich Aspekte der Bewertung und Selektion bevorzugter Kandidaten aus einer Menge oder einem Feld von Korrespondenzen 12 zu Bildpaaren B1, B2 oder allgemein zu einer Mehrzahl von Bildern B1, B2.

Gemäß einer alternativen Sichtweise der vorliegenden Erfindung betrifft diese auch die Bewertung und Selektion von Korrespondenzen 12 zu Bildpaaren B1, B2 oder allgemein zu einer Mehrzahl von Bildern B1, B2 und/oder Aspekte der Verbesserung kamerabasierter Schätzungen der relativen Orientierung.

Des Weiteren betrifft die vorliegende Erfindung gemäß einer weiteren zusätzlichen alternativen Sichtweise Aspekte von Verfahren und Vorrichtungen zur Verbesserung videobasierter Eigenbewegungsschätzungen.

Dem Thema Korrespondenzbildung begegnet man im Bereich maschinellem Sehen, Computer-Vision, insbesondere im Zusammenhang mit dem Begriff des optischen Flusses (OF), und bei der Stereodisparität.

Im Zusammenhang mit dem optischen Fluss werden Korrespondenzen in zeitlicher Richtung gebildet, indem Zuordnungen zwischen Koordinaten in einem ersten Bild B1 und Koordinaten in einem zweiten Bild B2 bestimmt werden. Eine solche Korrespondenz gibt dann an, wie sich die Projektion eines Punktes in der 3D-Szene ins 2D-Bild von einer alten Koordinate zu einer neuen Koordinate weiterbewegt hat.

Dabei kann die Bewegung im Bild B1, B2 durch die Bewegung des Szenenpunktes oder durch die Bewegung der Kamera hervorgerufen sein, oder beides zugleich.

Bei Stereovision werden die beiden Bilder B1, B2 etwa zeitgleich von zwei Kameras erfasst, die sich an unterschiedlichen Orten befinden. Die relative Anordnung der Kameras ist dabei in der Regel fest und bekannt. Die Korrespondenzbildung ermöglicht die Bestimmung der Entfernung zum Punkt in der 3D-Szene mittels Triangulation.

Eine Übersicht über die besten Verfahren im Stand der Technik, insbesondere mit Bezug auf Fahrerassistenzsysteme, gibt beispielsweise "The KITTI Vision Benchmark Suite" unter http://www.cvlibs.net/datasets/kitti.

Bei einer kamerabasierten Bestimmung der relativen Orientierung wird eine Mehrzahl von Korrespondenzen und insbesondere von Punktkorrespondenzen zwischen zwei Bildern B1, B2 genutzt, um daraus die relative Orientierung der Kamerapositionen in Bezug auf die - oft als statisch angenommene - Szene zu errechnen.

Die Bilder B1, B2 können auch von zwei unterschiedlichen Kameras stammen, die mechanisch starr miteinander verbunden sein können.

Stammen die beiden Bilder B1, B2 von derselben Kamera, spricht man auch von einer Eigenbewegungsschätzung. Es wird dabei die relative Bewegung - insbesondere in Bezug auf die Szene - ermittelt, die die Kamera in der Zwischenzeit vollzogen hat. Diese Bewegung kann im Allgemeinen als Kombination aus einer 3D-Rotation und einer 3D-Translation beschrieben werden.

Im Sinne der vorliegenden Erfindung werden Aspekte der Eigenbewegungsschätzung oder -bestimmung S3 und/oder Aspekte der Schätzung oder Bestimmung S3 einer relativen Orientierung, welche auch den Mehr-Kamera-Fall einschließen, gleichwertig und - insbesondere wenn sie isoliert genannt werden - jeweils rein beispielhaft behandelt. Sämtliche technischen Aspekte, die im Zusammenhang mit einer Eigenbewegungsschätzung erörtert werden, sind in gleichem Maße auch auf technische Aspekte der Schätzung einer relativen Orientierung und insbesondere im Hinblick auf einen Mehr-Kamera-Fall vorteilhaft anwendbar.

Die vorliegende Erfindung beschäftigt sich insbesondere auch mit einem Thema der Selektion S2-2 einer möglichst geeigneten und insbesondere optimalen Teilmenge von Korrespondenzen aus der Gesamtheit aller abgeleiteten Korrespondenzen.

Eine derartige Auswahl oder Selektion kann z.B. sinnvoll oder notwendig sein, wenn ein oder mehrere der folgenden Umstände vorliegt:

- Ein nachfolgender Verfahrensschritt oder Algorithmus, z.B. einer Bildbewertung und/oder Bildbearbeitung, besitzt keine ausreichende Kapazität, um die Gesamtheit aller bereitgestellten Korrespondenzen - insbesondere in Echtzeit - zu verarbeiten.

- In der Gesamtheit aller bereitgestellten Korrespondenzen liegen ungeeignete Korrespondenzen vor, die vor der weiteren Verarbeitung besser herausgefiltert werden sollten.

Beispiele für diesen Fall sind:

- fehlerhafte Korrespondenzen, also zum Beispiel falsche Zuordnungen, und

- Korrespondenzen zwischen Punkten der Szene, die zu eigenbewegten Objekten gehören, also nicht zu dem Teil der Szene gehören, auf den sich die Bestimmung der relativen Orientierung beziehen soll. Beispiele für eigenbewegte Objekte sind Fußgänger, fahrende Autos, ziehende Wolken, Spiegelungen auf reflektierenden Oberflächen.

- Die Korrespondenzen wurden mit unterschiedlicher Genauigkeit ermittelt. Dann würde man die Korrespondenzen mit höherer Genauigkeit bevorzugen.

- Die Korrespondenzen sind ungleichmäßig im Bild oder im Raum verteilt. Dann könnte die Selektion die Gleichmäßigkeit verbessern. Denn für die Bestimmung der relativen Orientierung ist es vorteilhaft, wenn die Korrespondenzen aus unterschiedlichen Raumrichtungen stammen.

Erfindungsgemäß wird die Möglichkeit geschaffen, Anforderungen - z.B. im Sinne von Gütekriterien - an die Auswahl zu stellen und diejenigen Korrespondenzen auszuwählen, die diese erfüllen oder sogar bestmöglich erfüllen.

Es können verschiedene Klassen von Gütekriterien im Zusammenhang mit der vorliegenden Erfindung verwendet werden:

(1) Zum Beispiel kann ein Maß ermittelt werden, das eine Aussage darüber ermöglicht, wie eindeutig eine Korrespondenz 12 in einem lokalen Umfeld ermittelt werden konnte. Beispielsweise kann ermittelt werden, wenn die Korrespondenz entlang einer Kante oder auf Grund periodischer Strukturen mehrdeutig sein kann. Das Maß für die Eindeutigkeit kann als Zahlenwert codiert werden.

(2) Alternativ oder zusätzlich kann eine Korrespondenz jeweils mit ihrer zeitlichen Vorgängerkorrespondenz verglichen und auf Konsistenz der Flussvektoren über die Zeit geprüft. Bei bestätigter Konsistenz liegt ein zeitlich stabiles Verhalten vor. Ist diese Konsistenz immer wieder erfüllt, so erhöht sich das Vertrauen, das z.B. in Form eines Alters als Zahlenwert angegeben werden kann.

Das erfindungsgemäße Verfahren kann in bestehenden oder kommenden Generationen von Fahrerassistenzsystemen - z.B. als Implementierung in einem ASIC - eingesetzt werden, um aus Korrespondenzen zum optischen Fluss die besten Kandidaten für eine Eigenbewegungsschätzung zu selektieren.

Neben den beiden oben genannten Gütekriterien (1) und (2) können weitere Gütekriterien zum Einsatz kommen, zum Beispiel auch die nachfolgend beschriebenen Gütekriterien. Sämtliche Gütekriterien können einzeln oder in beliebiger Kombination miteinander verwendet werden, um eine Auswahl oder Selektion S2-2 von bereits abgeleiteten Korrespondenzen zu durchzuführen.

Dies wird nachfolgend an einem konkreten Ausführungsbeispiel erläutert. Dieses Ausführungsbeispiel entspricht einer möglichen Implementierung in einem Produkt.

Zunächst wird ein optisches Flussfeld ermittelt. Jedem Flussvektor - aufgefasst als Korrespondenz 12 - können 6 unterschiedliche Qualitätsmaßen zugeordnet und der Datenstruktur des Flussvektors angehängt werden. Aus den Qualitätsmaßen kann jeweils eine Priorität berechnet werden, wie dies im Zusammenhang mit Figur 3 dargestellt ist. Zusätzlich können weitere Merkmale - im Sinne zusätzlicher Informationen 30, 32 - berücksichtigt werden, z.B. eine Maske, die einem früheren Zeitpunkt zugeordnet ist und auszuschließende Bildpunkte kennzeichnet, wie dies im Zusammenhang mit Figur 4 dargestellt ist. Aus der Gesamtheit der Informationen kann eine bevorzugte Auswahl von Korrespondenzen 12 abgeleitet und erzeugt werden, wie dies im Zusammenhang mit Figur 5 dargestellt ist.

Nachfolgend werden einige Kernaspekte und Vorteile der Erfindung näher erläutert:

- Eine Auswahl einer bevorzugten Untermenge von Korrespondenzen 12 aus einer Gesamtheit bereitgestellter Korrespondenzen 12 kann unter Berücksichtigung einer beliebigen Kombination der nachfolgenden Kriterien erfolgen:

    - Gleichmäßigkeit: Die Abtastpunkte sollen möglichst gleichmäßig über das Bild 10 bzw. über das Feld 10 von Korrespondenzen 12 verteilt sein.

        Statt einer Gleichmäßigkeit im Bild 10 kann auch eine Gleichmäßigkeit im Raum angestrebt werden, z.B. über eine konstante Anzahl von Korrespondenzen pro Raumwinkel.

        Noch allgemeiner kann - anstelle einer Gleichmäßigkeit - ein bestimmter ortsabhängiger und/oder raumwinkelabhängiger Dichteverlauf der Korrespondenzen angestrebt werden.

    - Priorität: Es sollen bevorzugt die besten Korrespondenzen 12 gemäß einer Priorität ausgewählt werden.

    - Optionale Informationen 30, 32 können zusätzlich zum Aspekt der Priorität berücksichtigt werden oder in die Bestimmung der Priorität einfließen.

- Qualitätsmaße: Es können unterschiedliche Qualitätsmaße für die bestehenden Korrespondenzen 12 erzeugt und genutzt werden, die bevorzugt in codierter Form vorliegen und z.B. an die jeweilige Korrespondenz angehängt oder ihr zugeordnet werden.

- Kombination von Qualitätsmaßen: Es können mehrere bestehende Qualitätsmaße miteinander kombiniert werden, um daraus ein neues Qualitätsmaß oder eine neue Priorität zu ermitteln und einer jeweiligen Korrespondenz zuzuordnen.

- Zusammenfassung von Qualitätsmaßen: Mehrere - insbesondere codierte - Qualitätsmaße können zusammengefasst werden zur Nutzung als Adresse einer Lookup-Tabelle (LUT) oder Auslesetabelle, die die Adresse auf eine Skala von Qualitäten und/oder Prioritäten abbildet.

Die Verwendung einer LUT ist sinnvoll, wenn eine endliche und nicht zu große Anzahl an Kombinationen von Qualitätsmaßen und/oder sonstigen Attributen existiert, so dass jeder solchen Kombination, die auch als Zahl dargestellt werden kann, eine Priorität zugeordnet werden kann. Diese Zuordnung kann dann explizit - und in der Regel einmalig - als LUT abgespeichert und immer wieder abgerufen werden. Dieses Vorgehen kann vom Rechenaufwand günstiger sein, als die Priorität stets aufs Neue zu bestimmen.

- Trainingsdaten: Möglich ist die Erzeugung einer solchen LUT anhand von Trainingsdaten.
- Weitere Informationen: Denkbar ist die Einbeziehung von weiteren Informationen, wobei diese auch von anderen Systemkomponenten, Verfahren und/oder Algorithmen stammen können, z.B. von einer videobasierten Objektklassifikation oder von einer auf maschinellem Lernen basierenden semantischen Segmentierung. Folgende Aspekte sind dabei denkbar

    - Informationen über die Bewegungsmöglichkeiten eines Objekts oder eine Objektklasse (Beispiel: Korrespondenzen 12 auf Fußgängern könnten vorsichtshalber grundsätzlich ausgeschlossen werden, egal ob der Fußgänger gerade in Bewegung ist oder nicht),

    - Informationen über das Vorhandensein eigenbewegter Objekte, insbesondere mit nicht epipolar konformer Bewegung, (Hintergrund: Bezieht sich die Bestimmung der relativen Orientierung auf eine als statisch angenommene Szene, so verhalten sich alle zugehörigen Korrespondenzen 12 epipolar konform, beziehen sich also auf denselben Epipol.)

    - Informationen in Form binärer Masken oder in Form von Bildern von Qualitätsmaßen oder Prioritäten und/oder

    - Informationen, die einem älteren Zeitpunkt zugeordnet sind und unter Verwendung des optischen Flusses (Korrespondenzen 12) auf einen gewünschten Zeitpunkt übertragen werden können.

- Informationen, die einem älteren Zeitpunkt zugeordnet sind und unter Verwendung einer bekannten Eigenbewegung auf einen gewünschten Zeitpunkt übertragen werden können.

Erfindungsgemäß können diese Aspekte genutzt werden, um bei einem Verfahren zur Auswahl einer bevorzugten Untermenge von Korrespondenzen 12 aus einer Gesamtheit 10 bereitgestellter Korrespondenzen 12 eingesetzt zu werden und um damit eine Eigenbewegungsschätzung der Kamera bezüglich ihrer Umgebung vorzunehmen.

Qualitätsmaße und Abbildung auf eine Priorität

Um eine bevorzugte Untermenge von Korrespondenzen 12 ermitteln zu können, müssen Kriterien bzw. Maße verfügbar sein, anhand derer z. B. eine Prioritätsreihenfolge ermittelt werden kann.

Falls nur ein einziges Qualitätsmaß vorhanden ist, ist die Festlegung trivial, denn das Qualitätsmaß oder eine Abbildung davon, z. B. Kehrwert, Vorzeichenumkehr,

Rundung, Funktion, usw., kann unmittelbar als Priorität verwendet werden.

Falls mehrere Qualitätsmaße vorhanden sind, z.B. eine Anzahl n, so ist es sinnvoll, diese geeignet miteinander zu kombinieren und dabei gegebenenfalls zum Beispiel eine Abbildung von einem n-dimensionalen Raum auf die eindimensionale Skala der Prioritäten vorzunehmen.

Wie oben bereits erwähnt, können die Qualitätsmaße (1) und (2) z.B. individuell an jeden Flussvektor als Zusatzinformation angehängt werden, z.B. mit jeweils 2 bit pro Qualitätsmaß.

Ein weiteres Qualitätsmaß könnte beispielsweise die Information enthalten, in welcher Pyramidenstufe einer Auflösungspyramide die jeweilige Korrespondenz ermittelt wurde.

Bei einem Ausführungsbeispiel der vorliegenden Erfindung können zum Beispiel vier weitere Qualitätsmaße angehängt werden, und zwar zu je 1 bit oder 2 bit. Insgesamt wären bei diesem Ausführungsbeispiel mithin 6 Qualitätsmaße, zum Beispiel durch QM0 bis QM5 bezeichnet, vorhanden, repräsentiert mit 10 bit. Es ist vorteilhaft, in diesen Qualitätsmaßen unterschiedliche Qualitätsaspekte zu codieren, die möglichst statistisch unabhängig voneinander sind, um somit den gesamten darin darstellbaren Informationsgehalt möglichst groß zu machen.

Figur 6 stellt das binäre Layout für die Codierung eines Flussvektors oder einer Korrespondenz 12 und seiner bzw. ihrer Qualitätsmaße dar. Die insgesamt 32 bit sind aufgeteilt in 22 bit für den eigentlichen Flussvektor oder die eigentliche Korrespondenz 12 selbst und 10 bit für die Qualitätsmaße QM0 bis QM5.

Es ist von Vorteil, alle Qualitätsmaße in aufeinanderfolgenden Bits abzulegen. Dies erleichtert den direkten Zugriff auf Untergruppen oder auf die Gesamtheit der Qualitätsmaße, die hier mit "QCode" bezeichnet ist.

Die Qualitätsmaße können miteinander kombiniert werden, z.B. gewichtet addiert, multipliziert, logisch verknüpft, usw., um ein kombiniertes Qualitätsmaß zu erzeugen. Die Vorschrift für die Kombination kann dabei von der Anwendung abhängen. Z.B. könnte eine erste Anwendung alle Qualitätsmaße berücksichtigen, eine zweite Anwendung nur einen Teil davon, eine dritte Anwendung andere Gewichte anwenden.

Das Konstruieren einer geeigneten rechnerischen Verknüpfung kann aber schwierig sein, insbesondere wenn die durch die Verknüpfung erzeugte Priorität einen ähnlichen Wertebereich ausnutzen soll, wie die Gesamtheit der originalen Qualitätsmaße, die ja hier 10 bit und somit einen Wertebereich 0 - 1023 aufweist.

Eine Alternative ist daher die Abbildung mit einer Lookuptabelle (LUT). Dabei kann die Zusammenfassung der Qualitätsmaße zu einem Wort, hier mit QCode bezeichnet, als Adresse in der LUT aufgefasst werden. An diesen LUT-Adressen sind dann Prioritätswerte gespeichert, die ausgelesen werden können.

In einem entsprechenden ASIC können mehrere derartige LUTs vorgesehen sein: Die LUT für das Priority-Sampling bildet 10 bit auf 10 bit ab. Weitere LUTs bilden 10 bit auf weniger Bits ab.

Anstelle der Verwendung eines ASICs sind alternativ oder zusätzlich in Kombination auch frei programmierbare Strukturen, zum Beispiel in einer CPU oder in einer allgemeinen digitalen Signalverarbeitungseinrichtung, denkbar.

Bei einer besonders vorteilhaften Ausführungsform

- sind die vorgesehenen Prioritätswerte der LUT alle unterschiedlich, mit dem Vorteil einer umkehrbar eindeutigen Abbildung, d.h. eine Abbildung ohne Informationsverlust, und

- decken insgesamt denselben Wertebereich ab wie die Adressen, und zwar mit dem Vorteil, dass die binäre Wortlänge so gering wie möglich bleibt.

In dem Ausführungsbeispiel ist eine Abbildung vorgesehen, bei welcher die 10 bit Adresse mittels der LUT auf eine 10 bit Priorität abgebildet wird.

Dieses Vorgehen eröffnet auch die Möglichkeit, aufwendigere Verfahren offline durchzuführen, um eine optimale LUT zu finden, z.B. anhand eines automatisierten Trainingsverfahrens, das auf großen Mengen an Daten basiert.

Das Ergebnis der Anwendung der LUT auf die als QCode bezeichnete Zusammenfassung der Qualitätsmaße für ein Flussfeld oder eine Gesamtheit von Korrespondenzen ist in Figur 3 dargestellt: Je dunkler, stärker schraffiert oder kontrastiert ein jeweiliges Pixel 11 ist, desto höher ist die Priorität des an dieser Stelle endenden Flussvektors bzw. der diesem Pixel zugeordneten Korrespondenz 12. Bei fehlendem Flussvektor oder fehlender Korrespondenz 12 ist die Priorität 0, entsprechend einem weißen Pixel in der Darstellung.

Dass in Figur 3 der zentrale Bildbereich dunkler ist als die seitlichen Bereiche links und rechts ist darin begründet, dass der Zentralbereich in einer höheren örtlichen Auflösung prozessiert wurde, was sich auch in den Qualitätsmaßen widerspiegelt und bei der Bestimmung der Priorität berücksichtigt wurde.

Gleichmäßige Abtastung von Korrespondenzen mit hoher Priorität

Für viele Anwendungen ist es von Vorteil, die Untermenge von Korrespondenzen 12 möglichst gleichmäßig über das Bild verteilt auszuwählen. Dies gilt insbesondere für die Schätzung der relativen Orientierung.

Dazu wäre es zunächst naheliegend, ein geeignet skaliertes, gleichmäßiges Raster über das Bild zu legen, z.B. ein Rechteckraster oder hexagonales Raster, und die Abtastungen an den Rasterpunkten vorzunehmen, oder alternativ die Abtastpunkte mit einem Quasi-Zufallsgenerator zu erzeugen, der eine gute Gleichverteilung gewährleistet.

Ein solches Vorgehen würde jedoch nicht gewährleisten, dass Korrespondenzen hoher Priorität bevorzugt werden.

Es ist also ein Verfahren gesucht, das gleichzeitig beides gewährleistet, also eine möglichst gute Gleichverteilung und eine möglichst hohe Priorität der abgetasteten Korrespondenzen.

Das erfindungsgemäße Verfahren sieht daher vor, das Bild 10 in nichtüberlappende Teilregionen 15 zu zerlegen, sprich eine Kachelung oder eine Parkettierung auszubilden, und aus jeder Kachel 15 z.B. die erste beste Korrespondenz 12 zu selektieren. Figur 7 zeigt hierzu ein bevorzugtes Ausführungsbeispiel mit rechteckigen Kacheln 15 mit zeilenweise versetzten Fugen wie bei einem Mauerwerk. Die Kacheln 15 sind hier 8 Pixel breit und 4 Pixel hoch und kachelzeilenweise um eine halbe Kachelbreite versetzt.

Es kommen auch kleinere Kacheln 17 vor, z.B. an den Bildrändern. Die Kachelformen und Kachelgrößen können auch variabel sein, z.B. in der Bildmitte kleiner, wenn dort mehr Abtastwerte gezogen werden sollen als in den äußeren Bildbereichen.

Die Kachelformen können beispielsweise polygonal (Vielecke) sein. Nichtüberlappende Kachelungen sind bevorzugt, weil damit sichergestellt wird, dass eine Korrespondenz nicht mehrfach ausgewählt werden kann. Überlappende Kachelungen, z.B. von Rechtecken variabler Größe, sind jedoch nicht ausgeschlossen, da sie andere Vorteile aufweisen: Beispielsweise ist die Bestimmung der Zuordnung, also in welchen Kacheln eine Korrespondenz liegt, bei rechteckigen Formen besonders einfach.

An jedem Pixel 11 können eine oder mehrere Korrespondenzen 12 hinterlegt sein, die jeweils mit einer Priorität versehen sind.

Die Pixel 11 einer Kachel 15 werden bevorzugt in einer vorgegebenen Reihenfolge abgearbeitet, z.B. spaltenweise von oben nach unten und dann von links nach rechts, wie dies in Figur 8 durch den Verlauf der Pfeile 19 dargestellt ist. Dabei wird die Korrespondenz 13 mit der höchsten Priorität innerhalb der Kachel ermittelt. Falls in der Kachel 15 mehrere Korrespondenzen 13 die höchste Priorität besitzen, wird nach einer vorbestimmten Regel verfahren, z.B. die erste oder letzte Korrespondenz mit höchster Priorität gewählt.

Dadurch ergibt sich das gewünschte Verhalten, dass also gute Gleichverteilung und hohe Priorität der abgetasteten Korrespondenzen 12 gewährleistet werden. Gleichzeitig ist der Rechenaufwand hierfür sehr gering.

Berücksichtigung weiterer Merkmale

Zusätzlich zu den Qualitätsmaßen, die an die Korrespondenz 12 angehängt sind, können noch weitere Merkmale berücksichtigt werden.

Diese können z.B. als eine oder mehrere Masken eingespeist werden, wobei eine Maske die gleiche Größe wie das Feld 10 von Korrespondenzen 12 haben kann. Eine solche Maske ist in Figur 4 gezeigt. Der Inhalt der Maske kann binär sein oder einen größeren Wertebereich aufweisen.

Der Inhalt der Masken kann wiederum mit der oben beschriebenen Priorität kombiniert werden, z.B. gewichtet addiert, multipliziert, logisch verknüpft, usw., oder aber von vorneherein in die Berechnung der Priorität mit einbezogen werden, ggf. unter Verwendung einer LUT mit entsprechend größerem Wertebereich.

Besonders vorteilhaft kann es sein, in zwei Schritten vorzugehen, z.B. zunächst die oben beschriebene gleichmäßige Abtastung vorzunehmen und danach z.B. eine oder mehrere binäre Masken zu berücksichtigen, um zu entscheiden ob der bei der Abtastung gewählten Kandidat akzeptiert oder verworfen wird. Dieses Vorgehen verringert den Aufwand, da die Information aus den Masken nur für die kleinere Untermenge der abgetasteten Korrespondenzen 12 berücksichtigt werden muss. Der Vorteil des geringeren Aufwands kommt in dem gezeigten Ausführungsbeispiel besonders zum Tragen, weil das unten im Detail beschriebene rechenintensive Warping auf diese kleinere Untermenge beschränkt bleibt.

Im gezeigten Ausführungsbeispiel kennzeichnet die Maske potenziell eigenbewegte Bildregionen, die besser ausgeschlossen werden sollten, wenn eine Eigenbewegungsschätzung auf Basis der Korrespondenzen vorgenommen werden soll, denn die hier zu schätzende Eigenbewegung soll die relative Bewegung zwischen der Kamera und der statischen Welt angeben und von sonstigen eigenständig sich bewegenden Objekten unbeeinflusst bleiben.

Daher ist es von Vorteil, solche eigenständig bewegten Objekte vorab zu erkennen und z.B. in einer Maske zu kennzeichnen.

Diese Erkennung kann durch Detektion von nicht epipolar konformer Bewegung gemäß der Darstellung aus Figur 2 mit den Verbindungen 34 bis 36 erfolgen. Dabei wird die geschätzte relative Orientierung genutzt, aus der der Epipol bzw. die epipolaren Richtungen ermittelt werden können. Somit kann für jede Korrespondenz festgestellt werden, ob diese epipolar konform ist. Ist dies nicht der Fall, so kann dies z.B. anhand der Maske entsprechend gekennzeichnet werden. Die so gebildete Maske kann dann bevorzugt in einem nächsten Zeitschritt oder aber auch schon sofort genutzt werden.

Zur Kombination der Prioritäten gemäß Figur 3 mit der Maske gemäß Figur 4 wurde dem Ausführungsbeispiel eine folgende Lösung verwendet: Die selektierte

Korrespondenz wird verworfen, falls das zu Grunde liegende Pixel als potenziell eigenständig bewegt gekennzeichnet ist, andernfalls wird sie behalten. Auch andere Kombinationen sind denkbar.

Weitere Beispiele für Informationen, die in Form solcher Masken berücksichtigt werden können, sind nachfolgend aufgelistet:

- Denkbar ist die Nutzung einer semantischen Segmentierung, die z.B. für jeden Bildpunkt angibt, um welche Objektklasse es sich handelt, ggf. mit Angabe von Wahrscheinlichkeiten. Diese Information kann hier sinnvoll genutzt werden, z.B. um daraus ein Maß für die "Immobilität" daraus abzuleiten.

  Je größer die Immobilität, umso besser ist der Szenenpunkt zur Eigenbewegungsschätzung geeignet:

  - Z.B. wäre die Immobilität besonders hoch bei den Objektklassen Straße, Bordstein, Leitplanke, Verkehrsschild, Baum, Mauer, Gebäude.

  - Besonders niedrig wäre die Immobilität z.B. bei den Objektklassen Zweiradfahrer, Fußgänger, Glasoberfläche (wegen möglicher Spiegelungen), Schneeflocke.

- Ferner kann die Maskierung von Bildteilen genutzt werden, die von der Selektion ausgeschlossen werden sollen: Beispielsweise ist es bei einer nach vorne ausgerichteten Fahrerassistenzkamera sinnvoll, den Bereich der eigenen Motorhaube auszuschließen, wenn dieser von der Kamera erfasst wird. Denn es wäre von erheblichem Nachteil, Korrespondenz aus dem Bereich der Motorhaube mit in die Eigenbewegungsschätzung einzubeziehen, da diese ja starr mit der Kamera verbunden ist und eine Nullbewegung, also maximale Immobilität zu erwarten ist, oder Spiegelungen von Szenenpunkten zeigt, z.B. Bewegungen, die die Eigenbewegungsschätzung irritieren könnten.

- Denkbar ist zusätzlich oder alternativ auch die Nutzung einer Maskierung von Bildteilen, die auf Grund von Beschränkungen des optischen Pfades entstehen. Z.B. kann es bei einer Weitwinkeloptik in den Bildecken Bereiche geben, die von der Optik zum Beispiel wegen zu kleinem Bildkreis nicht oder nur oder unzureichend abgedeckt werden, zum Beispiel auch wegen Bildfehlern, starken Aberrationen oder dergleichen, oder in denen Störungen durch Spiegelungen und Streulicht zu erwarten sind und die daher besser ausmaskiert werden sollten.

Zeitliches Warping der weiteren Merkmale durch optischen Fluss

In der Praxis und insbesondere in einem Echtzeitsystem kann man mit dem Problem konfrontiert sein, dass eine benötigte Information - wie z.B. die oben genannten Masken - noch nicht für den aktuellen Zeitpunkt bereitsteht, sondern nur in einer älteren Version für einen früheren Zeitpunkt.

Ein Abwarten ist teilweise nicht möglich, weil sonst die Latenz und damit die Reaktionszeit zu groß würden oder weil Kausalitätsgründe dagegensprechen: In dem gezeigten Ausführungsbeispiel hängt die Ermittlung der eigenständig bewegten Objekte von dem Ergebnis der Eigenbewegungsschätzung ab. Es liegt also eine Rückkopplung vor. Dies ist auch in Figur 2 anhand des Pfeils 34 dargestellt.

In solchen Fällen ist es von Vorteil, die Information aus der alten Maske auf den gewünschten Zeitpunkt zu übertragen, dieser Vorgang wird auch als Warping bezeichnet. Das ist von besonderem Vorteil, weil die Korrespondenzen schon vorliegen und die Flussvektoren angeben, wie sich Szenenpunkte im Bild weiterbewegt haben. Entsprechend kann angegeben werden, wie sich die mit den Szenenpunkten assoziierten Attribute weiterbewegt haben.

Nachfolgend wird von 3 Zeitpunkten $t_M < t_P < t_C$ ausgegangen:

- $t_M$ ist ein Zeitpunkt, für den die Information z.B. in Form einer Maske vorliegt (M : Maske),

- $t_P$ ist ein früherer Zeitpunkt für die Bestimmung der Korrespondenzen 12 (P : Previous),

- tc ist ein aktueller Zeitpunkt für die Bestimmung der Korrespondenzen 12 (C : Current).

Die Korrespondenzen 12 zwischen den Zeitpunkten $t_P$ und $t_C$ sollen bereits vorliegen, z.B. als Rückwärtsfluss, also in den jüngeren Koordinaten zu tc, und abgetastet sein.

Ist tp identisch mit $t_M$, liegt also die Maske für den Zeitpunkt $t_P$ vor, so ist das Warping besonders einfach: Für jede abgetastete Koordinate (x, y) zum Zeitpunkt tc liegt ein Flussvektor (u, v) als Korrespondenz 12 vor, so dass daraus die Korrespondenz 12 mit der Struktur (x - u, y - v) ermittelt werden kann. An dieser Bildposition kann die Maske entsprechend ausgelesen werden.

Während es sich bei (x, y) normalerweise um ganzzahlige Pixelkoordinaten handelt, ist dies bei der Korrespondenz 12 mit dem Korrespondenzvektor (x - u, y - v) im Allgemeinen nicht der Fall (Sub-Pixel-Anteil der Bewegung), hier muss also geeignet gerundet oder interpoliert werden. Unter Interpolieren kann auch eine Mehrheitsentscheidung verstanden werden, z.B. auf Basis der Werte der Maske in einer kleinen Nachbarschaft. Den in der Praxis besonders wichtigen Fall mit $t_M < t_P <$ tc veranschaulicht Figur 9. Jeweils mit den Pfeilen 91 dargestellt sind die Rückwärtsflussvektoren, die an den ganzzahligen Pixelkoordinaten bei $t_C$ enden und an den nichtganzzahligen Pixelkoordinaten bei $t_P$ beginnen. Da die Maske zu einem früheren Zeitpunkt $t_M < t_P$ gehört, sollte dieser zusätzliche zeitliche Abstand geeignet kompensiert werden. Dies kann zumindest näherungsweise dadurch geschehen, dass der jeweilige Flussvektor als Korrespondenz 12 rückwärts verlängert wird, und zwar um einen Faktor

$$s = (t_C - t_M) / (t_C - t_P) \qquad\qquad (1)$$

Der Zugriff auf die Maske sollte also entsprechend an der Stelle (x - s·u, y - s·v) erfolgen, wobei auch hier wieder geeignetes Runden oder Interpolieren erforderlich sein kann. Die Verlängerung ist in Figur 9 jeweils mit dem Pfeil 92 bezeichnet.

Dem Ansatz liegt die Annahme zu Grunde, dass Bewegungsrichtung und Bewegungsgeschwindigkeit zumindest kurzzeitig näherungsweise konstant sind (Trägheitsannahme), was in der Praxis meistens hinreichend gut erfüllt ist.

Das hier beschriebene Ausführungsbeispiel bezieht sich auf einen (abgetasteten) Rückwärtsflusses zwischen den Zeitpunkten $t_P$ und $t_C$.

Auch andere Varianten sind denkbar, z.B. die zusätzliche Nutzung eines Rückwärtsflusses zwischen den Zeitpunkten $t_M$ und tp, falls vorhanden. Dieser Ansatz ist genauer und die Trägheitsannahme ist nicht nötig, jedoch ist der Aufwand höher, da die in der Maske enthaltene Information in zwei Schritten weitertransportiert werden muss: Zunächst wird mit dem neueren Flussvektor zwischen $t_P$ und $t_C$ eine Position im Bild $t_P$ ermittelt. Dort wird - gegebenenfalls nach geeignetem Runden oder Interpolieren - der ältere Flussvektor zwischen $t_P$ und $t_M$ ausgelesen. Damit wird eine Position in der Maske ermittelt, die schließlich ausgelesen wird, wobei auch hier wieder geeignetes Runden oder Interpolieren erforderlich sein kann.

Ebenso sind Varianten mit Vorwärtsfluss denkbar sowie Varianten, bei denen sowohl Vorwärtsfluss als auch Rückwärtsfluss ausgenutzt werden können.

Endergebnis und Nutzung

Das Endergebnis für das Ausführungsbeispiel ist in Figur 5 zu sehen. Hier sind die Abtastpositionen eingezeichnet. Diese Abtastpositionen sind gleichmäßig über das Bild 10 verteilt. Durch den Versatz der Kachelzeilen und das Seitenverhältnis der Kacheln 15 ergibt sich ungefähr ein hexagonales Abtastmuster. Trotzdem sind die Prioritäten immer maximal in der jeweiligen Kachel. Potenziell eigenständig bewegte Objekte sind gemäß der mittels Warping propagierten Maske ausgeschlossen, was man an den ausgestanzten Fußgängern erkennen kann. Die so selektierten Korrespondenzen 12 sind also besonders gut für eine Eigenbewegungsschätzung geeignet. Optional können die Prioritätswerte an den Algorithmus zur Eigenbewegungsschätzung weitergereicht werden. Dieser kann die Prioritäten berücksichtigen, z. B. in Gewichte umwandeln, mit denen die jeweiligen Korrespondenzen in die Schätzung eingehen.

Figur 2 zeigt Blockschaltbild für einen möglichen Ablauf. Das erste und zweite Bild B1 bzw. B2 kann von unterschiedlichen Kameras stammen oder von derselben Kamera. Gestrichelte Linien stehen für optionale Anteile. Die Verbindungen 34 bis 36 stehen für die beschriebene Gewinnung und Berücksichtigung von Informationen über eigenbewegte Objekte, um deren Korrespondenzen bei der Schätzung der relativen Orientierung möglichst auszuschließen.

Figur 3 zeigt, dass jedem Flussvektor bzw. jeder Korrespondenz 12 eine Priorität zugeordnet ist. Die Prioritäten werden durch unterschiedliche Punktdichten dargestellt, je höher die Punktdichte, desto höher ist die Priorität.

In Figur 3 existieren auch Pixel oder Bereiche, für die keine Korrespondenz bestimmt werden kann. Diese Pixel oder Bereiche sind dann weiß dargestellt, was der Priorität 0 oder ungültig entspricht.

Figur 4 macht deutlich, dass zusätzlich zur Priorität weitere Merkmale berücksichtigt werden können, z.B. eine Maske für einen Zeitpunkt $t_M$, welche potenziell nicht-statische Regionen kennzeichnet, z.B. auf Grund eigenbewegter Objekte, die hier zentral weiß dargestellt sind.

Figur 5 zeigt ein Ergebnis des erfindungsgemäßen Priority-Samplings, und zwar unter Berücksichtigung potenziell nicht-statischer Regionen. Schwarz dargestellt sind die ausgewählten Abtastpositionen, an denen sich die bevorzugten Korrespondenzen befinden.

Figur 6 zeigt ein Beispiel für das Bitlayout eines Flussvektors und seiner Qualitätsmerkmale. Von insgesamt 32 bit sind hier 22 bit für den Flussvektor bzw. für die Korrespondenz 12 selbst vorgesehen und 10 bit für Zusatzinformation, die hier einzelne Qualitätsmerkmale zu je 1 bit oder 2 bit (QM0 bis QM5) enthält, die auch gemeinsam betrachtet werden können (QCode), z. B. als Adresse für eine Lookup-Tabelle.

Figur 7 zeigt ein Beispiel für die Zerlegung eines Bildes 10 mit Pixel 11 und ggf. Korrespondenzen 12 in Kacheln 15. Hier sind die Kacheln 15 acht Pixel breit und vier Pixel hoch. Die Kachelzeilen sind hier horizontal zueinander versetzt wie bei einem Mauerwerk. Sofern in der Kachel 15 Flussvektoren vorhanden sind, wird z. B. ein bevorzugter Flussvektor bzw. eine bevorzugte Korrespondenz 13 pro Kachel 15 ausgewählt, hier durch einen Kreis markiert. Es existieren auch Kacheln 15, in denen kein Flussvektor 11 vorhanden ist, und zwar gemäß den schraffierten und zusätzlich mit 16 bezeichneten Kacheln 15.

In Figur 8 ist dargestellt, dass in einer Kachel 15 die Pixel 11, denen jeweils eine oder mehrere Korrespondenzen zugeordnet sein können, in einer vorbestimmten Reihenfolge abgearbeitet werden, z.B. links oben beginnend, bevorzugt spaltenweise, dann von links nach rechts.

In Figur 9 ist gezeigt, dass im Normalfall die Maske - hier MOM, Moving Objects Mask - einem früheren Zeitpunkt $t_M < t_P < t_C$ zugeordnet ist als die beiden Bilder, zwischen denen der optische Fluss bestimmt wird (Zeitpunkte $t_P$ und $t_C$). Dieser Zeitversatz zwischen $t_M$ und tp kann jedoch kompensiert werden, z.B. durch Rückwärtsverlängerung 92 des Flussvektors 91 mit dem Faktor $s = (t_C - t_M) / (t_C - t_p)$ und Auslesen der Maske an entsprechender Stelle.

Das Binärformat eines Flussvektors 12 und seiner Qualitätsmerkmale 22 kann gemäß der Darstellung in Figur 6 aufgebaut sein. Das Format kann offen sichtbar sein und es können ständig Transfers von Feldern von Korrespondenzen zwischen einem zu Grunde liegenden ASIC und einem Speicher erfolgen. Für das Abbilden der Qualitätsmerkmale mittels eines 10-bit-QCodes in eine Priorität kann der Anwender z.B. eine LUT oder Auslesetabelle einprogrammieren, die über einen Treiber in Registern ablegt wird. Auch können binäre Masken in einem Speicher vorgehalten und im richtigen Moment eingelesen werden und sind dann ggf. entsprechend sichtbar. Das Ergebnis des Priority-Samplings kann wiederum als Liste gespeichert und ebenfalls sichtbar sein.

Es kann ein entsprechender ASIC z.B. für Fahrerassistenzsysteme entwickelt werden. Alternativ oder zusätzlich können die erfindungsgemäß beschriebenen Funktionen oder Teile davon frei programmierbarer, zu Beispiel im Zusammenhang mit einer CPU oder einem allgemeinen digitalen Signalprozessor, realisiert werden.

**Patentansprüche**

1. Computer-implementiertes Verfahren (S) zum Bewerten von Korrespondenzen (10, 12) von Bildern (B1, B2) von wenigstens einer Kamera eines Fahrzeugs, wobei die Korrespondenzen (10,12) auf dem Konzept des optischen Flusses beruhen, mit:

   - Bereitstellen (S1-1) von den Korrespondenzen (10, 12) zwischen gegebenen ersten und zweiten Bildern (B1, B2),
   - Bereitstellen (S1-2) einer Mehrzahl von Qualitätsmaßen als Attribute (20, 22) zur Charakterisierung einer jeweiligen Korrespondenz (10, 12), wobei das jeweilige Qualitätsmaß als Attribut (20, 22) einer betrachteten Korrespondenz (10, 12) repräsentativ ist für

      • ein Maß der Eindeutigkeit, mit welcher eine jeweilige Korrespondenz (10, 12) in einem lokalen Umfeld ermittelt wurde, oder
      • ein Maß der Konsistenz einer jeweiligen Korrespondenz (10, 12) mit einer zeitlich vorangegangenen Korrespondenz,

   - Bewerten (S2-1) und bedingtes Selektieren (S2-2) der Korrespondenzen (10, 12), wobei dem Bewerten (S2-1) von Korrespondenzen (10, 12) eine Kombination von Attributen (20, 22) und dem Selektieren (S2-2) von Korrespondenzen (10, 12) ein Ergebnis des Bewertens (S2-1) zu Grunde gelegt werden, und
   - Bereitstellen (S2-3) selektierter Korrespondenzen (10, 12) als Bewertungsergebnis (100).

2. Verfahren (S) nach Anspruch 1, bei welchem ein jeweiliges Qualitätsmaß als Attribut (20, 22) einer betrachteten Korrespondenz (10, 12) repräsentativ ist für mindestens einen der folgenden Aspekte oder einer Kombination davon:

- für ein Maß einer - zumindest lokalen - Ortsabhängigkeit und/oder Raumwinkelabhängigkeit der Verteilung der Korrespondenzen zumindest im Bereich einer jeweils betrachteten Korrespondenz (10, 12) und insbesondere für ein Maß der Gleichmäßigkeit einer ortsabhängigen und/oder raumwinkelabhängigen Verteilung der Korrespondenzen,

- für ein Maß einer Priorität zur bevorzugten Berücksichtigung einer zu Grunde liegenden Korrespondenz (10, 12)

- für ein Maß für das Vorliegen einer korrekten Zuordnung einer jeweiligen Korrespondenz (10, 12) zu Bereichen der zu Grunde liegenden Bilder (B1, B2),

- für ein Maß einer Eigenbewegung der mit der jeweiligen Korrespondenz (10, 12) im Zusammenhang stehenden Bereiche der zu Grunde liegenden Bilder (B1, B2), insbesondere eines damit im Zusammenhang stehenden Objekts und/oder unter Berücksichtigung nicht epipolarer konformer Bewegungen,

- für ein Maß einer Bewegungsmöglichkeit der mit der jeweiligen Korrespondenz (10, 12) im Zusammenhang stehenden Bereiche der zu Grunde liegenden Bilder (B1, B2), insbesondere eines damit im Zusammenhang stehenden Objekts,

- für ein Maß einer Genauigkeit, mit welcher eine jeweilige Korrespondenz (10, 12) bestimmt wurde,

- für ein Maß einer bei der Ermittlung der jeweiligen Korrespondenz (10, 12) zu Grunde gelegten Auflösung oder Auflösungsstufe,

- für ein Maß einer Zugehörigkeit der mit der jeweiligen Korrespondenz (10, 12) im Zusammenhang stehenden Bereiche der zu Grunde liegenden Bilder (B1, B2), insbesondere eines damit im Zusammenhang stehenden Objekts, zu einer semantischen Klasse, vorzugsweise auf der Grundlage einer videobasierten Objektklassifikation, eines Vorgangs maschinellen Lernens und/oder eines Vorgangs der semantischen Segmentierung,

- für ein Maß einer Zugehörigkeit der mit der jeweiligen Korrespondenz (10, 12) im Zusammenhang stehenden Bereiche der zu Grunde liegenden Bilder (B1, B2), insbesondere eines damit im Zusammenhang stehenden Objekts, zu einer Klasse zur Berücksichtigung zugelassener Bereiche der zu Grunde liegenden Bilder (B1, B2), insbesondere im Zusammenhang mit einer Maskierung, und/oder

-- für ein Maß der Konsistenz einer jeweiligen Korrespondenz (10, 12) mit einer zeitlich vorangegangenen Korrespondenz im Hinblick auf ein Maß von Konsistenz von Flussvektoren über die Zeit, wobei bei bestätigter Konsistenz ein zu Grunde liegendes zeitlich stabiles Verhalten insbesondere in Form eines Alters als Zahlenwert angegeben wird.

3. Verfahren (S) nach einem der vorangehenden Ansprüche,
bei welchem kombinierte Qualitätsmaße als Attribute (20, 22) verwendet werden, die aus einem oder einer Mehrzahl von Qualitätsmaßen abgeleitet sind durch Kombinationsbildung und/oder Funktionsbildung, insbesondere durch Kehrwertbildung, Vorzeichenumkehr, Rundung, Bildung von Funktionswerten von den Qualitätsmaßen zu Grunde liegenden skalaren oder vektoriellen Werten.

4. Verfahren (S) nach einem der vorangehenden Ansprüche,
bei welchem ein jeweiliges Attribut (20, 22) und/oder die zu Grunde liegenden Qualitätsmaße und insbesondere deren Werte zur Nutzung als Adresse codiert verwendet werden, insbesondere im Zusammenhang mit einer Werte der Attribute (20, 22) und/oder der Qualitätsmaße repräsentierenden Auslesetabelle.

5. Verfahren (S) nach einem der vorangehenden Ansprüche, bei welchem

- eine jeweilige Korrespondenz (10, 12) als eindimensionale Liste oder als Vektor repräsentiert wird und

- ein der Korrespondenz (10, 12) jeweils zugeordnetes Attribut (20, 22) und/oder deren Kodierung als ein oder mehrere zusätzliche Listenelemente bzw. Vektorkomponenten oder als Teile davon repräsentiert wird und der Liste bzw. dem Vektor angefügt ist bzw. sind.

6. Verfahren (S) nach einem der vorangehenden Ansprüche,
bei welchem Attribute (20, 22) und/oder Qualitätsmaße zu Korrespondenzen (10, 12) eines früheren Zeitpunkts auf eine Korrespondenz (10, 12) zu einem späteren Zeitpunkt übertragen und/oder extrapoliert werden.

7. Verfahren (S) nach einem der vorangehenden Ansprüche, bei welchem

- die Korrespondenzen (10, 12), insbesondere in Kombination mit den zugeordneten Attributen (20, 22), als Bild (10, 20) oder Matrix (10, 20) repräsentiert werden,

- das Bild (10, 20) bzw. die Matrix (10, 20) durch überlappende und/oder nicht überlappenden Teilregionen (15) überdeckt werden und
- für jede Teilregion (15) in Bezug auf in der Teilregion (15) vorliegende Korrespondenzen (12) eine - insbesondere im Hinblick auf die zugeordneten Attribute (22) - beste Korrespondenz (12) selektiert wird.

8. Betriebsassistenzverfahren und insbesondere Fahrassistenzverfahren für eine Vorrichtung und insbesondere für ein Fahrzeug, bei welchem

   - Bilder (B1, B2) erfasst und mit einem Verfahren nach einem der Ansprüche 1 bis 7 bewertet werden und
   - ein Ergebnis der Bewertung bei der Steuerung des Betriebs der Vorrichtung verwendet wird.

9. Vorrichtung zum Bewerten von Korrespondenzen (10, 12) von Bildern (B1, B2),

   - welche eingerichtet, ist ein Verfahren nach einem der Ansprüche 1 bis 7 auszuführen und
   - welche insbesondere als ASIC, als frei programmierbare digitale Signalverarbeitungsvorrichtung oder als Kombination davon ausgebildet ist.

10. Fahrzeug, welches eingerichtet ist, im Betrieb unter Verwendung eines Verfahrens nach einem der Ansprüche 1 bis 8 gesteuert zu werden und welches dazu eine Vorrichtung nach Anspruch 9 aufweist.

11. Computerprogramm, das eingerichtet ist, ein Verfahren (S) nach einem der Ansprüche 1 bis 8 auszuführen, wenn es auf einem Computer oder einer digitalen Signalverarbeitungseinrichtung ausgeführt wird.

12. Maschinenlesbares Speichermedium, auf dem das Computerprogramm nach Anspruch 11 gespeichert ist.

**Claims**

1. Computer-implemented method (S) for evaluating correspondences (10, 12) of images (B1, B2) from at least one camera of a vehicle, the correspondences (10, 12) being based on the concept of optical flow, comprising:

   - providing (S1-1) the correspondences (10, 12) between given first and second images (B1, B2),
   - providing (S1-2) a plurality of quality measures as attributes (20, 22) for characterizing a respective correspondence (10, 12), the respective quality measure as attribute (20, 22) of a considered correspondence (10, 12) being representative of

     • a measure of the unambiguity with which a respective correspondence (10, 12) was ascertained in a local environment, or
     • a measure of the consistency of a respective correspondence (10, 12) with a temporally preceding correspondence,

   - evaluating (S2-1) and conditionally selecting (S2-2) the correspondences (10, 12), evaluating (S2-1) correspondences (10, 12) being based on a combination of attributes (20, 22) and selecting (S2-2) correspondences (10, 12) being based on a result of the evaluating (S2-1), and
   - providing (S2-3) selected correspondences (10, 12) as an evaluation result (100).

2. Method (S) according to Claim 1, wherein a respective quality measure as attribute (20, 22) of a considered correspondence (10, 12) is representative of at least one of the following aspects or a combination thereof:

   - a measure of a - at least local - location dependence and/or solid angle dependence of the distribution of the correspondences at least in the region of a respectively considered correspondence (10, 12), and in particular a measure of the uniformity of a location-dependent and/or solid-angle-dependent distribution of the correspondences,
   - a measure of a priority for the preferred taking account of an underlying correspondence (10, 12),
   - a measure of the presence of a correct assignment of a respective correspondence (10, 12) to regions of the underlying images (B1, B2),
   - a measure of an intrinsic motion of those regions of the underlying images (B1, B2) which are related to the respective correspondence (10, 12), in particular of an object related thereto and/or taking account of non-epipolar conformal motions,
- a measure of a motion possibility of those regions of the underlying images (B1, B2) which are related to the respective correspondence (10, 12), in particular of an object related thereto,
- a measure of an accuracy with which a respective correspondence (10, 12) was determined,
- a measure of a resolution or resolution level taken as a basis when ascertaining the respective correspondence (10, 12),
- a measure of an association of those regions of the underlying images (B1, B2) which are related to the respective correspondence (10, 12), in particular of an object related thereto, with a semantic class, preferably on the basis of a video-based object classification, a machine learning process and/or a semantic segmentation process,
- a measure of an association of those regions of the underlying images (B1, B2) which are related to the respective correspondence (10, 12), in particular of an object related thereto, with a class for taking account of permitted regions of the underlying images (B1, B2), in particular in connection with masking, and/or
-- a measure of the consistency of a respective correspondence (10, 12) with a temporally preceding correspondence with regard to a measure of consistency of flow vectors over time, in which case, with consistency confirmed, an underlying temporally stable behaviour is specified as a numerical value in particular in the form of an age.

3. Method (S) according to either of the preceding claims,
wherein combined quality measures are used as attributes (20, 22), which are derived from one or a plurality of quality measures by combination formation and/or function formation, in particular by reciprocal value formation, sign reversal, rounding, formation of function values of scalar or vectorial values underlying the quality measures.

4. Method (S) according to any of the preceding claims, wherein a respective attribute (20, 22) and/or the underlying quality measures and in particular the values thereof are used in a manner coded as an address for utilization, in particular in connection with a readout table representing values of the attributes (20, 22) and/or values of the quality measures.

5. Method (S) according to any of the preceding claims, wherein

- a respective correspondence (10, 12) is represented as a one-dimensional list or as a vector, and
- an attribute (20, 22) respectively assigned to the correspondence (10, 12) and/or the coding thereof are/is represented as one or more additional list elements or vector components or as parts thereof and are/is added to the list or the vector.

6. Method (S) according to any of the preceding claims, wherein attributes (20, 22) and/or quality measures with respect to correspondences (10, 12) of an earlier point in time are transferred and/or extrapolated to a correspondence (10, 12) at a later point in time.

7. Method (S) according to any of the preceding claims, wherein

- the correspondences (10, 12), in particular in combination with the assigned attributes (20, 22), are represented as an image (10, 20) or a matrix (10, 20),
- the image (10, 20) or the matrix (10, 20) is covered by overlapping and/or non-overlapping partial regions (15), and
- a best correspondence (12) - in particular with respect to the assigned attributes (22) - is selected for each partial region (15) in regard to correspondences (12) present in the partial region (15).

8. Operating assistance method and in particular driving assistance method for a device and in particular for a vehicle, wherein

- images (B1, B2) are captured and evaluated by a method according to any of Claims 1 to 7, and
- a result of the evaluation is used in the control of operation of the device.

9. Device for evaluating correspondences (10, 12) of images (B1, B2),

- which is configured to carry out a method according to any of Claims 1 to 7 and
- which is designed in particular as an ASIC, as a freely programmable digital signal processing device or as a combination thereof.

10. Vehicle which is configured to be controlled during operation using a method according to any of Claims 1 to 8 and which has a device according to Claim 9 for this purpose.

11. Computer program configured to carry out a method (S) according to any of Claims 1 to 8 when it is executed on a computer or a digital signal processing device.

12. Machine-readable storage medium on which the computer program according to Claim 11 is stored.

**Revendications**

1. Procédé mis en œuvre par ordinateur (S) pour évaluer des correspondances (10, 20) d'images (B1, B2) provenant d'au moins une caméra d'un véhicule, dans lequel les correspondances (10, 12) sont basées sur le concept du flux optique, comprenant les étapes consistant à :

   - fournir (S1-1) des correspondances (10, 12) entre des premières et deuxièmes images données (B1, B2),
   - fournir (S1-2) une pluralité de mesures de qualité en tant qu'attributs (20, 22) pour caractériser une correspondance (10, 12) respective, dans lequel la mesure de qualité respective en tant qu'attribut (20, 22) d'une correspondance (10, 12) considérée est représentative

      d'une mesure d'univocité avec laquelle une correspondance (10, 12) respective a été établie dans un milieu local, ou
      d'une mesure de la cohérence d'une correspondance (10, 12) respective avec une correspondance antérieure dans le temps,

   - évaluer (S2-1) et sélectionner (S2-2) de manière conditionnelle
   les correspondances (10, 12), dans lequel l'évaluation (S2-1) des correspondances (10, 12) est basée sur une combinaison d'attributs (20, 22), et la sélection (S2-2) de correspondances (10, 12) est basée sur un résultat de l'évaluation (S2-1), et
   - fournir (S2-3) des correspondances (10, 12) sélectionnées en tant que résultat d'évaluation.

2. Procédé (S) selon la revendication 1, dans lequel une mesure de qualité respective en tant qu'attribut (20, 22) d'une correspondance (10, 12) considérée est représentative d'au moins l'un des aspects suivants ou d'une combinaison de ceux-ci :

   - d'une mesure de la dépendance du lieu - au moins locale - et/ou de la dépendance de l'angle solide de la distribution des correspondances au moins au niveau d'une correspondance (10, 12) respectivement considérée, et en particulier d'une mesure de l'homogénéité d'une distribution des correspondances, dépendante du lieu et/ou de l'angle solide,
   - d'une mesure d'une priorité pour la prise en compte préférée d'une correspondance (10, 12) sous-jacente,
   - d'une mesure de la présence d'une association correcte d'une correspondance (10, 12) respective à des zones des images (B1, B2) sous-jacentes,
   - d'une mesure d'un mouvement propre des zones en relation avec la correspondance (10, 12) respective des images (B1, B2) sous-jacentes, en particulier d'un objet en relation avec celle-ci et/ou en tenant compte de mouvements conformes non épipolaires,
   - d'une mesure d'une possibilité de mouvement des zones en relation avec la correspondance (10, 12) respective des images (B1, B2) sous-jacentes, en particulier d'un objet en relation avec celle-ci,
   - d'une mesure d'une précision avec laquelle une correspondance (10, 12) respective a été déterminée,
   - d'une mesure d'une résolution ou d'un niveau de résolution à la base de l'établissement de la correspondance (10, 12) respective,
   - d'une mesure d'une appartenance des zones en relation avec la correspondance (10, 12) respective des images (B1, B2) sous-jacentes, en particulier d'un objet en relation avec celle-ci, à une classe sémantique, de préférence sur la base d'une classification d'objet à base de vidéo, d'un processus d'apprentissage machine et/ou d'un processus de segmentation sémantique,
   - d'une mesure d'une appartenance des zones en relation avec la correspondance (10, 12) respective des images (B1, B2) sous-jacentes, en particulier d'un objet en relation avec celle-ci, à une classe pour la prise en compte de zones admissibles des images (B1, B2) sous-jacentes, en particulier en relation avec un masquage, et/ou
- d'une mesure de la cohérence d'une correspondance (10, 12) respective avec une correspondance antérieure dans le temps en vue d'une mesure de la cohérence de vecteurs de flux dans le temps, dans lequel, en cas de cohérence confirmée, un comportement stable dans le temps sous-jacent est indiqué, en particulier sous la forme d'un âge en tant que valeur numérique.

3. Procédé (S) selon l'une quelconque des revendications précédentes,
dans lequel des mesures de qualité combinées sont utilisées en tant qu'attributs (20, 22), qui sont dérivées d'une ou d'une pluralité de mesures de qualité par une génération de combinaison et/ou de fonction, en particulier par une génération de valeur réciproque, une inversion de signe, un arrondi, une génération de valeurs de fonction de valeurs scalaires et vectorielles à la base des mesures de qualité.

4. Procédé (S) selon l'une quelconque des revendications précédentes,
dans lequel un attribut (20, 22) respectif et/ou les mesures de qualité sous-jacentes, et en particulier leurs valeurs, sont utilisés pour leur exploitation en étant codés en tant qu'adresse, en particulier en relation avec un tableau de consultation représentant des valeurs des attributs (20, 22) et/ou des mesures de qualité.

5. Procédé (S) selon l'une quelconque des revendications précédentes, dans lequel

- une correspondance (10, 12) respective est représentée sous forme de liste unidimensionnelle ou de vecteur, et
- un attribut (20, 22) associé respectivement à la correspondance (10, 12) et/ou le codage de celle-ci sont représentés sous la forme d'un ou de plusieurs éléments de liste supplémentaires ou de composantes vectorielles ou de parties de ceux-ci et sont ajoutés à la liste ou au vecteur.

6. Procédé (S) selon l'une quelconque des revendications précédentes,
dans lequel des attributs (20, 22) et/ou des mesures de qualité pour des correspondances (10, 12) à un instant antérieur sont transférés à une correspondance (10, 12) à un instant ultérieur et/ou sont extrapolés.

7. Procédé (S) selon l'une quelconque des revendications précédentes, dans lequel

- les correspondances (10, 12), en particulier en combinaison avec les attributs (20, 22) associés, sont représentées sous forme d'image (10, 20) ou de matrice (10, 20),
- l'image (10, 20) ou la matrice (10, 20) est couverte par des régions partielles (15) qui se chevauchent et/ou qui ne se chevauchent pas, et
- une meilleure correspondance (12), en particulier en vue des attributs (22) associés, est sélectionnée pour chaque région partielle (15) en relation avec des correspondances (12) présentes dans la région partielle (15).

8. Procédé d'assistance opérationnelle et en particulier procédé d'assistance à la conduite pour un dispositif et en particulier pour un véhicule, dans lequel

- des images (B1, B2) sont détectées et évaluées à l'aide d'un procédé selon l'une quelconque des revendications 1 à 7, et
- un résultat de l'évaluation est utilisé pour la commande du fonctionnement du dispositif.

9. Dispositif permettant d'évaluer des correspondances (10, 12) d'images (B1, B2),

- qui est conçu pour exécuter le procédé selon l'une des revendications 1 à 7, et
- qui est réalisé en particulier sous forme d'ASIC, de dispositif de traitement de signal numérique programmable ou d'une combinaison de ceux-ci.

10. Véhicule qui est conçu pour être commandé en cours de fonctionnement en utilisant un procédé selon l'une quelconque des revendications 1 à 8 et qui présente à cet effet un dispositif selon la revendication 9.

11. Programme informatique qui est conçu pour exécuter un procédé (S) selon l'une quelconque des revendications 1 à 8 s'il est exécuté sur un ordinateur ou un dispositif de traitement numérique.

12. Support de stockage lisible par machine, sur lequel est stocké le programme informatique selon la revendication 11.

B1

B2

32 30

22 20

12 10

100

S

S1

S1-1 S1-2

S2

S2-1 S2-2

S2-3

S3

S4, S5

FIG. 1

FIG. 2

**FIG. 3**

EP 3 685 352 B1

FIG. 4

FIG. 5

FIG. 6

FIG. 7

EP 3 685 352 B1

FIG. 8

FIG. 9A

MOM für Zeitpunkt $t_M = t_P - T$

Pixel Zeitpunkt $t_P = t_C - T$

Pixel Zeitpunkt $t_C$

91

92

$s = 2$

$$s = \frac{t_C - t_M}{t_C - t_P}$$

FIG. 9B

MOM für Zeitpunkt $t_M = t_P - T$

Pixel Zeitpunkt $t_P = t_C - 2T$

Pixel Zeitpunkt $t_C$

91

92

$s = 3 / 2$

FIG. 9C

MOM für Zeitpunkt $t_M = t_P - 2T$

Pixel Zeitpunkt $t_P = t_C - 3T$

Pixel Zeitpunkt $t_C$

91

92

$s = 5 / 3$

EP 3 685 352 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2520243 A